# FASCICULE DE BREVET EUROPEEN

(11) **EP 3 558 797 B1**
(45) Date de publication et mention de la délivrance du brevet: **26.05.2021**
(21) Numéro de dépôt: 17821705.5
(22) Date de dépôt: 11.12.2017
(51) Int. Cl.: B62D 35/00

(54) **DÉFLECTEUR AÉRODYNAMIQUE RÉTRACTABLE**
EINZIEHBARER AERODYNAMISCHER DEFLEKTOR
RETRACTABLE AERODYNAMIC DEFLECTOR

(30) Priorité: 21.12.2016 FR 1663000
(43) Date de publication de la demande: 30.10.2019
(73) Titulaire: Compagnie Plastic Omnium, 69007 Lyon (FR)
(72) Inventeur: ANDRE, Gérald, 01500 Saint Denis en Bugey (FR); MAZUÉ, Bertrand, 69008 Lyon (FR)
(74) Mandataire: LLR
(86) Numéro de dépôt international: PCT/FR2017/053485
(87) Numéro de publication internationale: WO 2018/115632

(56) Documents cités:
- US-A1- 2004 130 182
- US-A1- 2014 110 970
- US-B2- 8 677 817

## Description

L'invention concerne le domaine des véhicules automobiles, et plus particulièrement les dispositifs aérodynamiques disposés à l'avant d'un véhicule pour réduire la trainée aérodynamique engendrée par ce véhicule roulant à grande vitesse.

Un des moyens utilisés de longue date pour améliorer l'efficacité aérodynamique des véhicules consiste à réduire l'espace en sous bassement entre la route et le véhicule.

La garde au sol des véhicules devant rester à une hauteur compatible avec les exigences d'usage, il est possible d'obtenir un résultat satisfaisant en abaissant une barrière aérodynamique faisant office de déflecteur au niveau de la partie frontale du véhicule, et préférentiellement disposée en avant des roues.

Ce déflecteur peut donc être abaissé ou relevé en fonction des conditions de roulage telles que la vitesse du véhicule ou l'état de la route.

La publication US7775582 offre un exemple de ce type de dispositif.

Toutefois d'autres contraintes doivent également être prises en compte pour la mise en œuvre de ces déflecteurs. On citera par exemple l'encombrement du dispositif en position relevée dans un espace réduit situé à l'avant du véhicule, la résistance mécanique pour s'opposer à la pression de l'air lorsque le véhicule roule à grande vitesse, la protection du dispositif et la déformabilité du dispositif en cas de choc frontal, la possibilité de replier le dispositif très rapidement lorsqu'un obstacle imprévu surgit sur la chaussée, ou encore la facilité de réparation en cas de dégradation.

Une contrainte supplémentaire provient enfin des exigences de style liées à cette partie du véhicule, dans laquelle le dispositif aérodynamique est visible de l'extérieur et fait partie intégrante de la carrosserie. Le déflecteur aérodynamique présente donc des formes galbées destinées à se placer en continuité de forme et de style avec la partie basse du pare-chocs.

De nombreuses publications ont proposé de résoudre tout ou partie des contraintes évoquées ci-dessus.

Ainsi la publication US 7775582 déjà citée, propose un système rigide actionné par câble, peu maniable, et relativement encombrant. Ce dispositif constitue également un obstacle à la déformabilité de la partie avant en cas de choc frontal.

La publication US8677817 décrit un déflecteur aérodynamique gonflable présentant un encombrement réduit et une déformabilité totale. Ce dispositif présente toutefois une faible résistance à la pression de l'air lorsque le véhicule roule à grande vitesse, et nécessite l'installation d'une source d'air comprimé à l'intérieur du véhicule.

Le dispositif décrit dans la publication US 8 702 152 se présente sous la forme d'un déflecteur aérodynamique mobile verticalement. Ce dispositif présente des difficultés de protection contre les aléas de la chaussée et ne peut pas être débrayé facilement. De plus, en cas de choc frontal, sa structure rigide placée très à l'avant se détériore facilement et contrarie la déformation du bloc avant vers l'arrière du véhicule. Des dispositifs similaires sont proposés par les publications US4951994 ou US7686382.

La publication US7686383 propose de déployer une pluralité de volets galbés et disposés dans le prolongement de la partie basse du pare-chocs. Ce dispositif présente l'avantage d'épouser la courbure du pare-chocs, mais s'accompagne d'une complexité de mise en œuvre peu compatible avec les exigences de robustesse et de coût imposées aux constructeurs automobiles.

La publication US8887845, prévoit de séparer la barrière aérodynamique en trois volets distincts pivotant sur des axes souples et courbes. Il en résulte des efforts moteurs importants pour compenser les pertes de transmission.

Le dispositif décrit dans la publication US4659130 reste encombrant et présente des difficultés pour se replier rapidement en cas de rencontre avec un obstacle disposé sur la chaussée.

Bien que tous ces dispositifs permettent de réduire la quantité d'air passant sous le véhicule, on observe qu'aucun d'entre eux ne permet de résoudre toutes les contraintes évoquées ci-dessus.

Le déflecteur aérodynamique selon l'invention se caractérise en ce qu'il comprend une peau déformable dont une lisière supérieure est rendue solidaire de la partie inférieure d'un pare-chocs avant, et dont la lisière inférieure est reliée à un bord avant d'un arceau rigide mobile sous l'action d'un dispositif de manoeuvre entre une position basse dans laquelle la peau déformable est déployée de manière à dévier le flux d'air se présentant sous le véhicule lorsque le véhicule avance, et une position haute dans laquelle la peau déformable est repliée dans un logement disposé à l'arrière du pare-chocs.

Du fait de la souplesse et de la capacité de la peau à se déformer, il devient possible de replier ou de déployer la peau en s'affranchissant des contraintes liées au galbe prononcé du profil inférieur du pare-chocs, et de placer la peau déformable en avant des roues du véhicule sur toute la largeur du pare-chocs. La peau déformable vient donc en continuité de forme avec la forme générale du pare-chocs avant et suit le galbe inférieur du pare-chocs d'une extrémité à l'autre du pare-chocs.

Cet avantage permet également, comme on le verra par la suite, de proposer un dispositif de manœuvre peu encombrant et léger permettant à la peau déformable de se replier sur elle-même et de subir des déformations contrôlées, pour rentrer dans le logement prévu à cet effet à l'arrière du pare-chocs, ou de se déployer complètement pour dévier le flux d'air passant sous le véhicule.

Le dispositif selon l'invention peut aussi comprendre isolément, ou en combinaison, les caractéristiques suivantes :
- En position basse, la peau déformable s'étend latéralement au-devant de chacune des roues avant du véhicule.
- En position basse la lisière inférieure de la peau déformable est disposée à une hauteur sensiblement constante du sol.
- La peau déformable est en continuité de forme avec le pare-chocs avant en dessous duquel elle s'étend lorsque l'arceau rigide est disposé dans la position basse.
- Le bord avant de l'arceau rigide sur lequel est attachée la lisière inférieure de la peau déformable présente un galbe.
- L'arceau rigide est formé à partir d'un matériau plastique ou composite.
- Le dispositif de manœuvre comprend :
   ∘ une ou plusieurs bielles avant, chacune des bielles avant ayant une première extrémité reliée au châssis du véhicule par une première articulation d'axe dd', et une seconde extrémité reliée à l'arceau rigide par une seconde articulation d'axe cc',
   ∘ une ou plusieurs bielles arrière, chacune des bielles arrière ayant une première extrémité reliée au châssis du véhicule par une première articulation d'axe aa', et une seconde extrémité reliée à l'arceau rigide par une seconde articulation d'axe bb',
      et les axes aa', bb', cc' et dd' sont parallèles entre eux et à la direction transversale OY du véhicule, et agencés de sorte que les projections desdits axes sur un plan perpendiculaire auxdits axes définissent les quatre sommets d'un parallélogramme rectangle déformable ; l'axe aa' est décalé de l'axe dd', selon la direction longitudinale vers l'arrière du véhicule, d'une distance d non nulle.
- Le dispositif de manœuvre est agencé de sorte que l'arceau rigide se déplace vers l'arrière du véhicule en passant de la position basse à la position haute.
- Un des deux axes par lequel les premières extrémités des bielles sont reliées au châssis est un arbre d'actionnement monté sur deux paliers fixés sur le châssis, et entrainé en rotation par un actionneur.
- Les premières extrémités des bielles arrières sont fixées sur l'arbre d'actionnement d'axe aa'.
- L'actionneur comprend un limiteur de couple dont le seuil est ajusté de sorte que, lorsque le véhicule est en mouvement et que l'arceau rigide heurte un obstacle, l'actionneur est débrayé et l'arceau rigide se dégage de la position basse vers la position haute sous l'effet de la quantité de mouvement acquise lors du choc par ledit arceau rigide.
- Une bielle de renvoi parallèle à un plan passant par les axes aa' et dd', est reliée par une de ses extrémités à une bielle avant, ou à une bielle arrière, par une articulation d'axe ff' parallèle à l'axe aa', et par l'autre de ses extrémités à une bielle motrice secondaire par une articulation d'axe ee' parallèle à l'axe aa', ladite bielle motrice secondaire étant parallèle à la bielle avant, ou à la bielle arrière, et comportant une autre extrémité fixée sur l'arbre d'actionnement.
- Le dispositif de manœuvre comprend deux bielles arrière disposées chacune à proximité des deux extrémités latérales dudit arceau rigide.
- Le dispositif de manœuvre comprend une bielle unique avant disposée sensiblement au centre dudit arceau rigide.

L'invention sera mieux comprise à la lecture des figures annexées, qui sont fournies à titre d'exemples et ne présentent aucun caractère limitatif, dans lesquelles :
- La figure 1 est une représentation schématique en perspective de l'avant d'un véhicule.
- La figure 2 est une représentation schématique en perspective de l'avant d'un véhicule dans lequel le déflecteur aérodynamique est déployé.
- La figure 3 est une représentation schématique en perspective de l'avant d'un véhicule dans lequel le dispositif de manœuvre est apparent.
- La figure 4 est une vue schématique en perspective du dispositif de manœuvre.
- La figure 5 est une vue schématique de côté du dispositif de manœuvre en position haute.
- La figure 6 est une vue schématique de dessous du dispositif de manœuvre en position haute.
- La figure 7 est une vue schématique en perspective de l'arbre d'actionnement et de l'actionneur du dispositif de manœuvre.

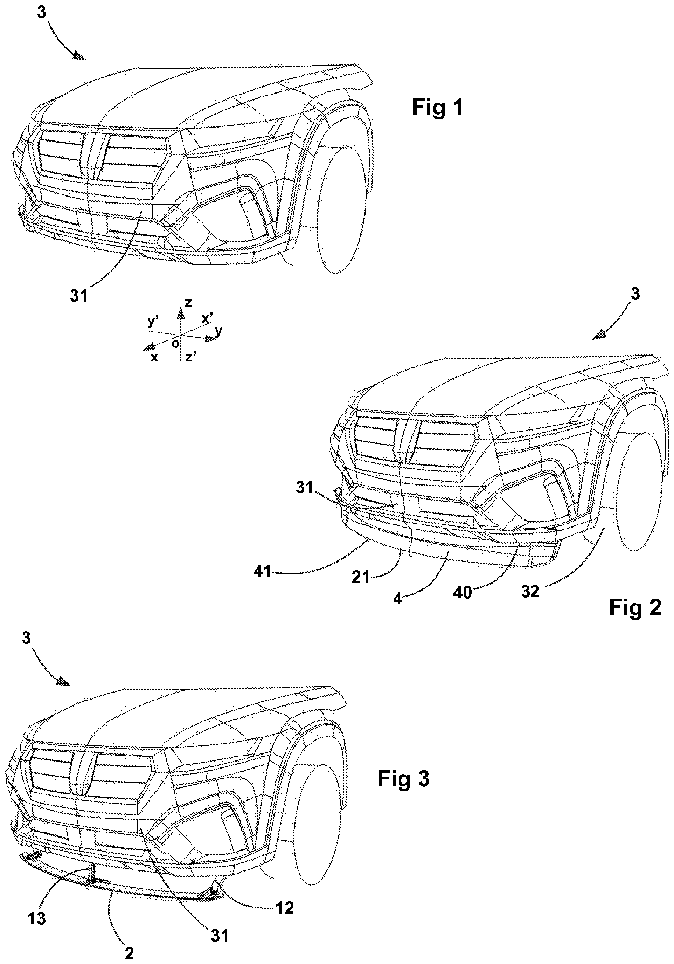

La figure 1 représente une vue partielle de l'avant d'un véhicule 3 comportant un pare-chocs avant 31. Ce pare-chocs est rendu solidaire du châssis du véhicule par des fixations (non représentées). Le déflecteur aérodynamique est en position haute et demeure invisible de l'extérieur du véhicule.

Dans ce qui suit, on entend par direction longitudinale, la direction X'OX allant de l'arrière vers l'avant du véhicule, par direction transversale, la direction Y'OY parallèle à l'axe des roues, et par direction verticale, la direction Z'OZ perpendiculaire au plan sur lequel le véhicule se déplace.

La figure 2 représente le même avant de véhicule 3 dans lequel la peau déformable 4 est déployée en position basse. La peau déformable 4 s'étend sur tout le front avant du véhicule et vient réduire le flux d'air se présentant sur la partie avant et passant sous le pare-chocs lorsque le véhicule roule à grande vitesse. On remarque que la peau déformable 4 vient également se placer partiellement à l'avant des roues avant.

La peau déformable 4 est reliée par sa lisière supérieure 40 au bord inférieur du pare-chocs avant 31, et par sa lisière inférieure 41 à un arceau rigide 2, visible à la figure 3 dans laquelle la peau déformable 4 a été retirée. La peau déformable 4 est en continuité de forme avec le pare-chocs avant 31 dont elle épouse le galbe du bord inférieur. Pour les mêmes raisons, le bord avant de l'arceau rigide 2 présente également un galbe similaire à celui de la partie basse du pare-chocs.

Dans cette position basse, la lisière inférieure 41 de la peau déformable et l'arceau rigide 2 sont positionnés à une hauteur relativement constante du sol.

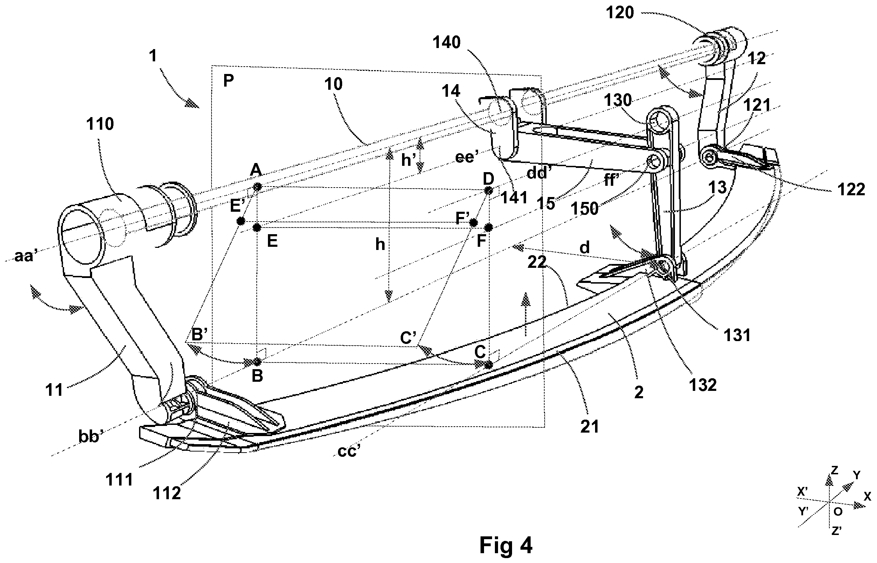

Le dispositif de manœuvre 1 assurant le déploiement ou la rentrée de la peau déformable servant de support à la présente description est représenté en détail à la figure 4. Sur cette figure, l'arceau rigide 2 est disposé dans la position basse correspondant au cas dans lequel la peau déformable 4 (non visible) est déployée.

L'arceau rigide 2, présente un bord avant 21 sur lequel est fixée la lisière inférieure 41 de la peau déformable 4.

A des fins de résistance aux chocs, de rigidité vibratoire et de légèreté, l'arceau rigide 2 peut avantageusement être réalisé à partir d'un matériau composite ou thermoplastique.

L'arceau rigide 2 est relié au châssis du véhicule par deux bielles arrière 11 et 12 et par une bielle avant 13.

La bielle avant 13 comporte une première extrémité reliée au châssis du véhicule par une première articulation 130 d'axe dd', et une seconde extrémité reliée à l'arceau rigide par une seconde articulation 131 d'axe cc'.

Les bielles arrière 11 et 12 comportent une première extrémité reliée au châssis du véhicule par une première articulation, respectivement 110 et 120, d'axe aa', et une seconde extrémité reliée à l'arceau rigide 2 par une seconde articulation, respectivement 111 et 121, d'axe bb'. Les deuxièmes articulations des bielles arrière et avant sont attachées sur l'arceau rigide 2 par des semelles, respectivement 112, 122 et 132.

Les axes aa', bb', cc' et dd' sont parallèles entre eux et à la direction transversale OY du véhicule, et agencés de sorte que les projections A, B, C, D, des axes aa', bb', cc' et dd' sur un plan P, perpendiculaire auxdits axes, définissent les quatre sommets d'un parallélogramme rectangle déformable. L'axe aa' est distant de l'axe dd', selon la direction longitudinale vers l'arrière du véhicule, d'une distance constante d non nulle égale à la distance constante entre les axes bb' et cc'. La distance constante entre les axes aa' et bb' ou entre les axes cc' et dd' est égale à h.

Le nombre de bielles avant et de bielles arrière n'est pas limité à celui faisant l'objet de la présente description. Aussi, il est tout à fait possible d'envisager des combinaisons multiples dans lesquelles on compte une seule bielle arrière et une seule bielle avant, ou une seule bielle arrière et deux bielles avant ou, pour assurer une meilleure rigidité, deux bielles arrière et deux bielles avant. Toutefois, en raison du galbe prononcé de l'arceau rigide 2, les bielles avant sont préférentiellement positionnées à proximité du centre de l'arceau rigide, défini ici comme étant la ligne d'intersection du plan de symétrie longitudinal OXZ du véhicule avec l'arceau rigide, et disposée à équidistance des deux extrémités latérales de l'arceau rigide.

Dans toutes ces configurations, les premières extrémités des bielles arrière sont reliées au châssis du véhicule par des premières articulations, d'axe aa', et les secondes extrémités des bielles arrières sont reliées à l'arceau rigide 2 par des secondes articulations d'axe dd'. De même, les premières extrémités des bielles avant sont reliées au châssis du véhicule par des premières articulations, d'axe dd', et les secondes extrémités des bielles avant sont reliées à l'arceau rigide 2 par des secondes articulations d'axe cc'.

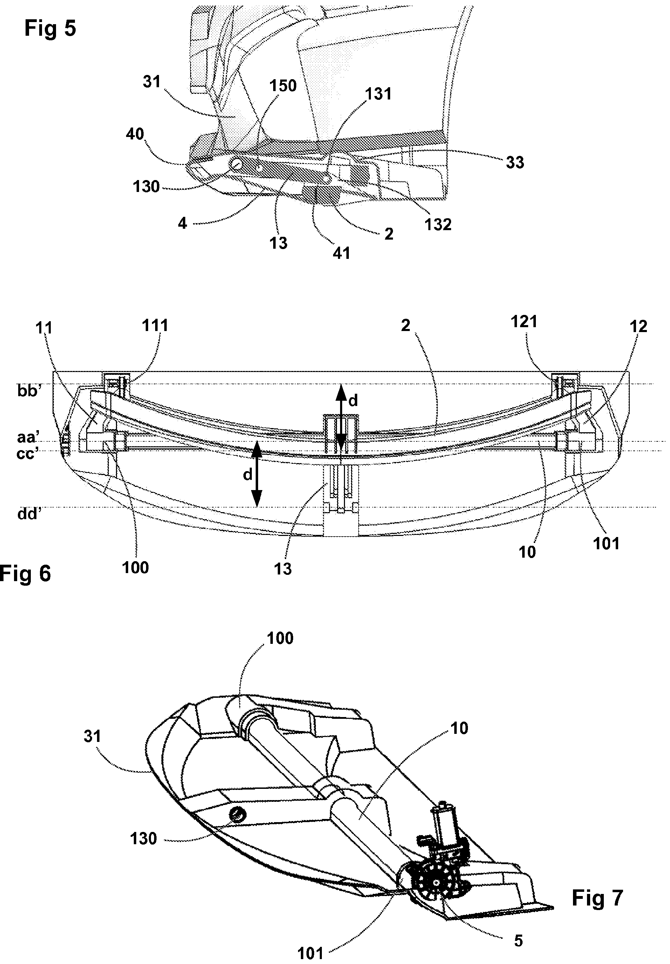

Dans le dispositif servant de support à la présente description, les premières extrémités des bielles arrières 11 et 12 sont fixées sur un arbre d'actionnement 10 d'axe aa' relié au châssis par des paliers 100 et 101, visibles aux figures 6 et 7, et qui font office de première articulation. L'arbre d'actionnement 10 est entrainé en rotation par un actionneur 5 disposé à une des extrémités latérales du dit arbre d'actionnement 10.

Cette disposition, dans laquelle l'arbre d'actionnement est placé le plus en arrière possible, autorise une meilleure déformation de la partie avant du véhicule en cas de choc frontal. De plus, l'actionneur et les bielles arrière, dont le cout de remplacement est élevé, sont mieux protégés en étant situés le plus loin possible des zones d'impact sur le pare-chocs.

La première articulation 130 de la bielle avant est en rotation libre autour de l'axe dd', et les secondes articulations, respectivement 111, 121, 131 reliant les bielles arrière et la bielle avant à l'arceau rigide sont en rotation libre autour de leurs axes respectifs, bb' et cc'.

En effectuant une rotation d'un quart de tour autour de l'axe aa' l'arbre d'actionnement 10 fait pivoter les bielles arrière 11 et 12 et fait passer l'arceau rigide de la position basse dans laquelle les bielles sont orientées sensiblement selon l'axe vertical à la position haute dans laquelle les bielles sont orientées sensiblement selon l'axe longitudinal. Au cours de ce mouvement, l'arceau rigide effectue une translation depuis l'avant vers l'arrière du véhicule.

La bielle avant est entrainée en mouvement par le déplacement des bielles arrière et de l'arceau rigide. Le parallélogramme formé par les bielles avant et arrière se déforme autour des axes fixes aa' et dd'. Et les points B et C se déplacent dans le plan P en B' et C'.

On observe que dans ce mouvement, le plan formé par les axes bb' et cc' et qui peut être assimilé au plan de l'arceau rigide 2, reste sensiblement parallèle au plan formé par le sol sur lequel circule le véhicule.

Dans le dispositif servant de support à la description de l'invention, l'arbre d'actionnement est un arbre rotatif d'axe aa' entrainant en rotation les bielles arrières 11 et 12. On observera qu'il est également possible de placer l'arbre d'actionnement sur l'axe dd' pour entrainer la bielle avant. Ou encore de mettre en rotation une des bielles à l'aide d'un arbre secondaire se déplaçant selon une trajectoire sensiblement linéaire.

On veillera dans tous les arrangements évoqués ci-dessus à faire en sorte que l'actionneur, ou plus généralement les moyens d'entrainement en rotation des bielles avant et arrière, soient débrayables sous l'effet d'une sollicitation mécanique anormale. En effet, lorsque le véhicule est en mouvement et que l'arceau rigide est placé dans la position basse, la garde au sol du véhicule est abaissée, et l'arceau rigide peut heurter un obstacle placé sur la chaussée. Il convient alors de préserver l'intégrité de l'arceau rigide, de la peau déformable, et plus généralement des bielles formant le dispositif de manœuvre.

A cet effet, l'actionneur 5 comprend un limiteur de couple dont le seuil est ajusté de sorte que, lorsque le véhicule est en mouvement et que l'arceau rigide heurte un obstacle, l'actionneur est débrayé et l'arceau rigide se dégage de la position basse vers la position haute en se déplaçant de l'avant vers l'arrière, sous l'effet de la quantité de mouvement acquise lors du choc entre ledit arceau rigide 2 et ledit obstacle. Et plus l'arceau rigide est léger plus la quantité de mouvement emmagasiné est faible et moins la dégradation due à l'impact entre l'arceau rigide et l'obstacle est importante.

Avantageusement, le dispositif de manœuvre peut comporter des éléments de motorisation additionnels permettant de transmettre l'effort moteur engendré par l'axe d'actionnement 10 à la bielle avant 13 de manière à éviter de transmettre des efforts trop importants dans les bielles.

Le dispositif de manœuvre 1 comprend une bielle de renvoi 15 parallèle à un plan passant par les axes aa' et dd', qui est reliée par une de ses extrémités à la bielle avant 13 par une articulation 150 d'axe ff' parallèle à l'axe aa', et par l'autre de ses extrémités à une bielle motrice secondaire 14 par une articulation 141 d'axe ee' parallèle à l'axe aa'. La bielle motrice secondaire 14 est parallèle à la bielle avant 13, et comporte une autre extrémité 140 fixée sur l'arbre d'actionnement 10.

La projection des axes aa', ee', ff' et dd' sur le plan P forme les quatre sommets A, E, F, D d'un parallélogramme déformable. La distance constante entre l'axe aa' et ee' ou entre l'axe dd' et l'axe ff' est égale à h', et la distance constante entre les axes ee' et ff', qui est la même que celle qui sépare les axes aa' et dd', est égale à d. Lorsque le dispositif de manœuvre est en mouvement, les points E et F se déplacent en E' et F'.

La bielle motrice secondaire 14 et la bielle de renvoi 15 permettent ainsi de transmettre une partie du couple de l'arbre d'actionnement 10 à la bielle avant 13, de manière à réduire les efforts de transmission dans les articulations placées entre les bielles arrière 111 et 121 et l'arceau rigide 2, et éviter la déformation irréversible du parallélogramme formé par les axes aa', bb', cc' et dd'.

Il va de soi que, lorsque l'arbre d'actionnement est disposé sur l'axe dd' sur lequel sont attachées les premières articulations des bielles avant, la bielle motrice secondaire est alors reliée à l'arbre d'actionnement avant et la bielle de renvoi à une bielle arrière.

La figure 5 est une vue de profil du déflecteur aérodynamique en position haute repliée. La peau déformable 4 est attachée par sa lisière supérieure 40 au pare-chocs 31 et par sa lisière inférieure 41 à l'arceau rigide 2. La bielle avant 13 est repliée dans un logement 33 placé sous le pare-chocs avant 31.

La figure 6 est une vue de dessous du dispositif de manœuvre lorsque l'arceau rigide 2 est placé dans la position haute correspondant à la figure 5.

Les bielles arrière 11 et 12 et la bielle avant sont disposées dans la position haute.

La figure 7 représente l'arbre d'actionnement 10 et l'actionneur 5. On observera que l'actionneur est disposé à une des extrémités latérales de l'arbre d'actionnement de manière à réduire les risques d'endommagement en cas de choc frontal.

Le déflecteur aérodynamique ainsi configuré permet de répondre à la plupart des contraintes de conception évoquées en introduction de la présente description.

Il offre en particulier une résistance suffisante à l'effort aérodynamique s'exerçant sur la peau en position basse déployée, une possibilité de se replier rapidement en cas de rencontre avec un obstacle imprévu placé sur la chaussée, un encombrement réduit en position haute repliée, une bonne protection et une bonne capacité à être réparé en cas de choc frontal. Enfin, la peau déformable peut avoir un profil extérieur en parfaite continuité de forme et de style avec le pare-chocs du véhicule de sorte qu'elle peut être déployée sur une hauteur sensiblement constante sur toute la largeur du véhicule, et en particulier devant les roues.

### NOMENCLATURE

1 Dispositif de manœuvre.
10 Arbre d'actionnement.
100, 101 Paliers de l'arbre d'actionnement 10 montés sur le châssis du véhicule.
11 Bielle arrière.
110 Première articulation de la bielle 11 ; liaison de la bielle arrière 11 sur l'arbre d'actionnement 10.
111 Deuxième articulation entre la bielle arrière 11 et l'arceau rigide 2.
112 Semelle d'attache de la deuxième articulation de la bielle arrière 12 sur l'arceau rigide 2.
12 Bielle arrière.
120 Première articulation de la bielle 12 ; liaison de la bielle arrière 12 sur l'arbre d'actionnement 10.
121 Deuxième articulation entre la bielle arrière 12 et l'arceau rigide 2.
122 Semelle d'attache de la deuxième articulation de la bielle 12 sur l'arceau rigide 2.
13 Bielle avant.
130 Première articulation entre la bielle avant et le châssis.
131 Seconde articulation entre la bielle avant 13 et l'arceau rigide 2.
132 Semelle d'attache de la deuxième articulation de la bielle 13 sur l'arceau rigide 2.
14 Bielle motrice secondaire.
140 Liaison de la bielle motrice secondaire 14 sur l'arbre d'actionnement 10.
141 Articulation entre la bielle motrice secondaire 14 et la bielle de renvoi 15.
15 Bielle de renvoi.
150 Articulation entre la bielle de renvoi 15 et la bielle avant 13.
aa' Axe de l'arbre d'actionnement.
bb' Axe des articulations 111 et 121.
cc' Axe de l'articulation 131.
dd' Axe de l'articulation 130.
ee' Axe de l'articulation 141.
ff' Axe de l'articulation 150.
h Distance entre les axes aa' et bb' ; égale à la distance entre les axes cc' et dd'.
h' Distance entre les axes aa' et ee' ; égale à la distance entre les axes dd' et ff.
d Distance entre les axes bb' et cc' ; égale à la distance entre les axes aa' et dd'.
2 Arceau rigide.
21 Bord avant de l'arceau rigide sur lequel est attachée la lisière inférieure 41 de la peau déformable 4.
22 Bord arrière de l'arceau rigide
3 Véhicule.
31 Pare-chocs.
32 Roues avant.
33 Logement placé sous le pare-chocs.
4 Peau déformable.
40 Lisière supérieure de la peau déformable.
41 Lisière inférieure de la peau déformable.
5 Actionneur.

## Revendications

1. Déflecteur aérodynamique disposé à l'avant d'un véhicule automobile (3) **caractérisé en ce qu'il** comprend une peau déformable (4) dont une lisière supérieure (40) est rendue solidaire de la partie inférieure d'un pare-chocs avant (31), et dont une lisière inférieure (41) est reliée à un bord avant (21) d'un arceau rigide (2) mobile sous l'action d'un dispositif de manœuvre (1) entre une position basse dans laquelle la peau déformable (4) est déployée de manière à dévier le flux d'air se présentant sous le véhicule lorsque le véhicule avance, et une position haute dans laquelle la peau déformable (4) est repliée dans un logement (33) disposé à l'arrière du pare-chocs.

2. Déflecteur aérodynamique selon la revendication 1, dans lequel, en position basse et déployée, la peau déformable (4) s'étend latéralement au-devant de chacune des roues (32) avant du véhicule.

3. Déflecteur aérodynamique selon la revendication 1 ou la revendication 2, dans lequel en position basse la lisière inférieure (41) de la peau déformable (4) est disposée à une hauteur sensiblement constante du sol.

4. Déflecteur aérodynamique selon l'une quelconque des revendications 1 à 3, dans lequel la peau déformable (4) est en continuité de forme avec le pare-chocs avant (31), en dessous duquel elle s'étend lorsque l'arceau rigide (2) est disposé dans la position basse.

5. Déflecteur aérodynamique selon l'une quelconque des revendications 1 à 4, dans lequel le bord avant (21) de l'arceau rigide (2) sur lequel est attachée la lisière inférieure (41) de la peau déformable (4) présente un galbe.

6. Déflecteur aérodynamique selon l'une quelconque des revendications 1 à 5, dans lequel l'arceau rigide (2) est formé à partir d'un matériau plastique ou composite.

7. Déflecteur aérodynamique selon l'une quelconque des revendications 1 à 6, dans lequel le dispositif de manœuvre comprend :
- une ou plusieurs bielles avant (13), chacune des bielles avant (13) ayant une première extrémité reliée au châssis du véhicule par une première articulation (130) d'axe dd', et une seconde extrémité reliée à l'arceau rigide par une seconde (131) articulation d'axe cc',
- une ou plusieurs bielles arrière (11, 12), chacune des bielles arrière (11, 12) ayant une première extrémité reliée au châssis du véhicule par une première articulation (110, 120) d'axe aa', et une seconde extrémité reliée à l'arceau rigide (2) par une seconde articulation (111, 121) d'axe bb',
et dans lequel :
- les axes aa', bb', cc' et dd' sont parallèles entre eux et à la direction transversale (OY) du véhicule, et agencés de sorte que les projections desdits axes (aa', bb', cc', dd') sur un plan (P) perpendiculaire auxdits axes définissent les quatre sommets (A, B, C, D) d'un parallélogramme rectangle déformable.
- l'axe aa' est décalé de l'axe dd', selon la direction longitudinale vers l'arrière du véhicule, d'une distance d non nulle.

8. Déflecteur aérodynamique selon la revendication 7, dans lequel le dispositif de manœuvre (1) est agencé de sorte que l'arceau rigide (2) se déplace vers l'arrière du véhicule en passant de la position basse à la position haute.

9. Déflecteur aérodynamique selon la revendication 7 ou la revendication 8, dans lequel un des deux axes (aa', dd') par lequel les premières extrémités des bielles sont reliées au châssis est un arbre d'actionnement (10) monté sur deux paliers (100, 101) fixés sur le châssis, et entrainé en rotation par un actionneur (5).

10. Déflecteur aérodynamique selon la revendication 9, dans lequel les premières extrémités des bielles arrières (11, 12) sont fixées sur un arbre d'actionnement d'axe aa' (10).

11. Déflecteur aérodynamique selon la revendication 10, dans lequel l'actionneur (5) comprend un limiteur de couple dont le seuil est ajusté de sorte que, lorsque le véhicule est en mouvement et que l'arceau rigide (2) heurte un obstacle, l'actionneur est débrayé et l'arceau rigide se dégage de la position basse vers la position haute sous l'effet de la quantité de mouvement acquise lors du choc par ledit arceau rigide.

12. Déflecteur aérodynamique selon l'une quelconque des revendications 7 à 11, dans lequel une bielle de renvoi (15) parallèle à un plan passant par les axes aa' et dd', est reliée par une de ses extrémités à une bielle avant (13), ou à une bielle arrière (11, 12), par une articulation (150) d'axe ff' parallèle à l'axe aa', et par l'autre de ses extrémités à une bielle motrice secondaire (14) par une articulation (141) d'axe ee' parallèle à l'axe aa', ladite bielle motrice secondaire (14) étant parallèle à la bielle avant (13), ou à la bielle arrière (11, 12), et comportant une autre extrémité (140) fixée sur l'arbre d'actionnement (10).

13. Déflecteur aérodynamique selon l'une quelconque des revendications 7 à 12, dans lequel le dispositif de manœuvre (1) comprend deux bielles arrière (11, 12) disposées chacune à proximité des deux extrémités latérales dudit arceau rigide (2).

14. Déflecteur aérodynamique selon l'une quelconque des revendications 7 à 13, dans lequel le dispositif de manœuvre (1) comprend une bielle avant (13) unique disposée sensiblement au centre dudit arceau rigide (2).

## Patentansprüche

1. Aerodynamischer Deflektor, der an der Vorderseite eines Kraftfahrzeugs (3) angeordnet ist, **dadurch gekennzeichnet, dass** er eine verformbare Haut (4) aufweist, bei der eine Oberkante (40) mit dem unteren Teil eines vorderen Stoßfängers (31) fest verbunden ist, und bei der eine Unterkante (41) mit einer Vorderkante (21) eines starren Bügels (2) verbunden ist, der unter der Wirkung einer Manövriervorrichtung (1) zwischen einer unteren Position, in der die verformbare Haut (4) so entfaltet ist, dass sie die unter dem Fahrzeug vorhandene Luft ablenkt, wenn sich das Fahrzeug vorwärts bewegt, und einer oberen Position bewegt werden kann, in der die verformbare Haut (4) in ein Gehäuse (33) eingesetzt ist, das an der Rückseite des Stoßfängers angeordnet ist.

2. Aerodynamischer Deflektor nach Anspruch 1, bei dem in der unteren und entfalteten Position die verformbare Haut (4) seitlich vor jedem der Vorderräder (32) des Fahrzeuges verläuft.

3. Aerodynamischer Deflektor nach Anspruch 1 oder Anspruch 2, wobei in der entfalteten Position die Unterkante (41) der verformbaren Haut (4) in einer im wesentlichen konstanten Höhe vom Boden angeordnet ist.

4. Aerodynamischer Deflektor nach einem der Ansprüche 1 bis 3, bei dem die verformbare Haut (4) in Formkontinuität mit dem vorderen Stoßfänger (31) steht, unter den sie sich erstreckt, wenn der starre Bügel (2) in der unteren Position angeordnet ist.

5. Aerodynamischer Deflektor nach einem der Ansprüche 1 bis 4, wobei die Vorderkante (21) des starren Bügels (2), an dem die Unterkante (41) der verformbaren Haut (4) befestigt ist, eine Krümmung aufweist.

6. Aerodynamischer Deflektor nach einem der Ansprüche 1 bis 5, wobei der starre Bügel (2) aus einem Kunststoff- oder Verbundmaterial gebildet ist.

7. Aerodynamischer Deflektor nach einem der Ansprüche 1 bis 6, **dadurch gekennzeichnet, dass** die Manövriervorrichtung aufweist:
- eine oder mehrere vordere Pleuelstangen (13), wobei jede der vorderen Pleuelstangen (13) ein erstes Ende aufweist, das durch ein erstes Gelenk (130) der Achse dd' mit dem Fahrgestell des Fahrzeugs verbunden ist, und ein zweites Ende, das durch ein zweites Gelenk (131) der Achse cc' mit dem starren Bügel verbunden ist,
- eine oder mehrere hintere Pleuelstangen (11, 12), wobei jede der hinteren Pleuelstangen (11, 12) ein erstes Ende aufweist, das mit dem Fahrgestell des Fahrzeugs durch ein erstes Gelenk (110, 120) der Achse aa' verbunden ist, und ein zweites Ende, das mit dem starren Bügel (2) durch ein zweites Gelenk (111, 121) der Achse bb' verbunden ist,
und in welchem:
- die Achsen aa', bb', cc' und dd' parallel zueinander und zur Querrichtung (OY) des Fahrzeugs sind und so angeordnet sind, dass die Projektionen der Achsen (aa', bb', cc', dd') auf eine Ebene (P) senkrecht zu den Achsen die vier Scheitelpunkte (A, B, C, D) eines verformbaren rechteckigen Parallelogramms definieren,
- die Achse aa' von der Achse dd' in Längsrichtung zum Fahrzeugheck hin um einen Abstand d, der ungleich Null ist, versetzt ist.

8. Aerodynamischer Deflektor nach Anspruch 7, **dadurch gekennzeichnet, dass** die Manövriervorrichtung (1) so angeordnet ist, dass sich der starre Bügel (2) von der unteren Position in die obere Position zum Heck des Fahrzeugs hin bewegt.

9. Aerodynamischer Deflektor nach Anspruch 7 oder 8, **dadurch gekennzeichnet, dass** eine der beiden Achsen (aa', dd'), durch die die ersten Enden der Pleuelstangen mit dem Fahrgestell verbunden sind, eine Antriebswelle (10) ist, die auf zwei am Fahrgestell befestigten Lagern (100, 101) montiert ist und durch ein Stellglied (5) in Drehung versetzt wird.

10. Aerodynamischer Deflektor nach Anspruch 9, bei dem die ersten Enden der hinteren Pleuelstangen (11, 12) auf einer Antriebswelle (10) mit einer Achse aa' befestigt sind.

11. Aerodynamischer Deflektor nach Anspruch 10, bei dem der Aktuator (5) einen Drehmomentbegrenzer aufweist, dessen Schwelle so eingestellt ist, dass, wenn das Fahrzeug in Bewegung ist und der starre Bügel (2) auf ein Hindernis aufschlägt, der Aktuator ausgerückt wird und der starre Bügel unter der Wirkung des während des Aufpralls durch den starren Bügel gewonnenen Bewegungsbetrags aus der unteren Position in die obere Position ausgerückt wird.

12. Aerodynamischer Deflektor nach einem der Ansprüche 7 bis 11, bei dem eine zu einer durch die Achsen aa' und dd' verlaufenden Ebene parallele Ablenkstange (15) an einem ihrer Enden mit einer vorderen Stange (13) oder mit einer hinteren Stange (11, 12) über ein Gelenk (150), das eine Achse ff' parallel zur Achse ff' hat, verbunden ist, und mit dem anderen seiner Enden an einem sekundären Antriebspleuel (14) mittels eines Gelenks (141), das eine Achse ee' parallel zur Achse aa' hat, wobei der sekundäre Antriebspleuel (14) parallel zum vorderen Pleuel (13) oder zum hinteren Pleuel (11, 12) ist und ein anderes Ende (140) aufweist, das an der Antriebswelle (10) befestigt ist.

13. Aerodynamischer Deflektor nach einem der Ansprüche 7 bis 12, wobei die Manövriervorrichtung (1) zwei hintere Stangen (11, 12) aufweist, die jeweils in der Nähe der beiden seitlichen Enden des starren Bügels (2) angeordnet sind.

14. Aerodynamischer Deflektor nach einem der Ansprüche 7 bis 13, wobei die Manövriervorrichtung (1) eine einzige vordere Verbindungsstange (13) aufweist, die im wesentlichen in der Mitte des starren Bügels (2) angeordnet ist.

## Claims

1. Aerodynamic deflector arranged at the front of a motor vehicle (3) **characterised in that** it comprises a deformable skin (4) of which an upper strip (40) is rigidly connected to the lower portion of a front bumper (31), and of which a lower strip (41) is connected to a front edge (21) of a rigid arch (2) that can be moved by a manoeuvring device (1) between a low position in which the deformable skin (4) is deployed so as to divert the flow of air that presents under the vehicle when the vehicle advances, and a high position in which the deformable skin (4) is folded away in a recess (33) arranged behind the bumper.

2. Aerodynamic deflector according to claim 1, wherein, in the low and deployed position, the deformable skin (4) extends laterally in front of each of the front wheels (32) of the vehicle.

3. Aerodynamic deflector according to claim 1 or 2, wherein, in the low position, the lower strip (41) of the deformable skin (4) is arranged at a substantially constant height from the ground.

4. Aerodynamic deflector according to any one of claim 1 to 3, wherein the deformable skin (4) is in continuity of shape with the front bumper (31) below which it extends when the rigid arch (2) is arranged in the low position.

5. Aerodynamic deflector according to any one of claims 1 to 4, wherein the front edge (21) of the rigid arch (2) to which the lower strip (41) of the deformable skin (4) is attached is curved.

6. Aerodynamic deflector according to any one of claims 1 to 5, wherein the rigid arch (2) is made of a plastic or composite material.

7. Aerodynamic deflector according to any one of claims 1 to 6, wherein the manoeuvring device comprises:
- one or more front connecting rods (13), each of the front connecting rods (13) having a first end connected to the vehicle chassis by a first hinge (130) of axis dd', and a second end connected to the rigid arch by a second hinge (131) of axis cc',
- one or more rear connecting rods (11, 12), each of the rear connecting rods (11, 12) having a first end connected to the vehicle chassis by a first hinge (110, 120) of axis aa', and a second end connected to the rigid arch (2) by a second hinge (111, 121) of axis bb',
and wherein:
- the axes aa', bb', cc' and dd' are parallel to each other and to the transverse direction (OY) of the vehicle and arranged so that the projections of said axes (aa', bb', cc', dd') on a plane (P) perpendicular to said axes define the four vertices (A, B, C, D) of a deformable right parallelogram.
- the axis aa' is offset from the axis dd', in the longitudinal direction towards the rear of the vehicle, by a non-zero distance d.

8. Aerodynamic deflector according to claim 7, wherein the manoeuvring device (1) is arranged so that the rigid arch (2) moves towards the rear of the vehicle when moving from the low position to the high position.

9. Aerodynamic deflector according to claim 7 or 8, wherein one of the two axes (aa', dd') by which the first ends of the connecting rods are connected to the chassis is an actuation shaft (10) mounted on two bearings (100, 101) attached to the chassis, and driven in rotation by an actuator (5).

10. Aerodynamic deflector according to claim 9, wherein the first ends of the rear connecting rods (11, 12) are attached to an actuation shaft (10) of axis aa'.

11. Aerodynamic deflector according to claim 10, wherein the actuator (5) comprises a torque limiter whose threshold is adjusted so that, when the vehicle is moving and the rigid arch (2) hits an obstacle, the actuator is disengaged and the rigid arch moves from the low position to the high position under the effect of the momentum acquired during the impact by said rigid arch.

12. Aerodynamic deflector according to any one of claims 7 to 11, wherein a return connecting rod (15) parallel to a plane passing through axes aa' and dd' is connected by one of its ends to a front connecting rod (13), or to a rear connecting rod (11, 12), by a hinge (150) of axis ff parallel to the axis aa', and by its other end to a secondary driving connecting rod (14) by a hinge (141) of axis ee' parallel to the axis aa', said secondary driving connecting rod (14) being parallel to the front connecting rod (13), or to the rear connecting rod (11, 12), and comprising another end (140) attached to the actuation shaft (10).

13. Aerodynamic deflector according to any one of claims 7 to 12, wherein the manoeuvring device (1) comprises two rear connecting rods (11, 12) each arranged near the two lateral ends of said rigid arch (2).

14. Aerodynamic deflector according to any one of claims 7 to 13, wherein the manoeuvring device (1) comprises a single front connecting rod (13) arranged substantially at the centre of said rigid arch (2).
